# EUROPÄISCHE PATENTANMELDUNG

(11) **EP 3 693 817 A1**
(43) Veröffentlichungstag der Anmeldung: **12.08.2020**
(21) Anmeldenummer: 20151564.0
(22) Anmeldetag: 14.01.2020
(51) Int. Cl.: G05B 19/042

(54) **VERFAHREN UND STEUERGERÄT ZUM ERKENNEN EINER POSITIONSÄNDERUNG FÜR EIN HAUSHALTGERÄT UND HAUSHALTGERÄT**

(30) Priorität: 29.01.2019 DE 102019102211
(71) Anmelder: Miele & Cie. KG, 33332 Gütersloh (DE)
(72) Erfinder: Zielke, Marcel, 59320 Ennigerloh (DE); Bockholt, Marcos, 33104 Paderborn (DE); Beckord, Christian, 33378 Rheda-Wiedenbrück (DE); Löffler, Alexander, 33102 Paderborn (DE); Sieding, Dirk, 44534 Lünen (DE)

(57) **Zusammenfassung**

Die Erfindung betrifft ein Verfahren zum Erkennen einer Positionsänderung für ein Haushaltgerät (100), das einen Schritt des Einlesens und einen Schritt des Vergleichens umfasst. Im Schritt des Einlesens wird ein Positionssignal (135) eingelesen, das eine ISTPosition des Haushaltgeräts (100) repräsentiert, und es wird ein in einer Speichereinrichtung (115) gespeichertes Herkunftsignal (140) eingelesen, das eine Initialposition des Haushaltgeräts (100) repräsentiert. Im Schritt des Vergleichens wird das Positionssignal (135) mit dem Herkunftsignal (140) verglichen, um die Positionsänderung zu erkennen, wenn die ISTPosition um mehr als einen vorbestimmten Toleranzwert von der Initialposition abweicht.

## Beschreibung

Die Erfindung betrifft ein Verfahren und ein Steuergerät zum Erkennen einer Positionsänderung für ein Haushaltgerät sowie ein Haushaltgerät.

Die DE102016112705A1 beschreibt eine Vorrichtung für ein Haushaltgerät, ein Verfahren zum Erfassen einer Transportbedingung des Haushaltgeräts sowie ein Haushaltgerät.

Der Erfindung stellt sich die Aufgabe, ein verbessertes Verfahren, ein verbessertes Steuergerät zum Erkennen einer Positionsänderung für ein Haushaltgerät sowie ein verbessertes Haushaltgerät zu schaffen.

Erfindungsgemäß wird diese Aufgabe durch ein Verfahren und ein Steuergerät zum Erkennen einer Positionsänderung für ein Haushaltgerät sowie ein Haushaltgerät mit den Merkmalen der Hauptansprüche gelöst. Vorteilhafte Ausgestaltungen und Weiterbildungen der Erfindung ergeben sich aus den nachfolgenden Unteransprüchen.

Mit der Erfindung erreichbaren Vorteile können unter anderem darin gesehen werden, das Haushaltgerät oder Teile des Haushaltgeräts vor vermeidbaren Beschädigungen zu schützen.

Daher wird ein Verfahren zum Erkennen einer Positionsänderung für ein Haushaltgerät vorgestellt, das einen Schritt des Einlesens und einen Schritt des Vergleichens umfasst. Im Schritt des Einlesens wird ein Positionssignal eingelesen, das eine IST-Position des Haushaltgeräts repräsentiert. Außerdem wird ein in einer Speichereinrichtung gespeichertes Herkunftsignal eingelesen, das eine Initialposition des Haushaltgeräts repräsentiert. Im Schritt des Vergleichens wird das Positionssignal mit dem Herkunftsignal verglichen, um die Positionsänderung zu erkennen, wenn die IST-Position um mehr als einen vorbestimmten Toleranzwert von der Initialposition abweicht.

Das Verfahren kann in einem Haushaltgerät, wie beispielsweise einem Trockner, einem Kühlgerät oder auch in einem Reinigungsgerät durchgeführt werden. Die Positionsänderung kann beispielsweise in Form eines Umzugs geschehen. Die IST-Position repräsentiert dabei beispielsweise eine aktuelle Position des Haushaltgeräts, während mit der Initialposition beispielsweise eine ursprüngliche Position des Haushaltgeräts verstanden werden kann.

Ferner kann im Schritt des Einlesens als ein die IST-Position repräsentierender Parameter eine aktuelle Betriebszeit, eine aktuelle Position und zusätzlich oder alternativ eine aktuelle IP-Adresse des Haushaltgeräts eingelesen werden und als ein die Initialposition repräsentierender Parameter eine gespeicherte Betriebszeit des Haushaltgeräts, eine gespeicherte Position des Haushaltgeräts und zusätzlich oder alternativ eine gespeicherte IP-Adresse des Haushaltgeräts eingelesen werden. Sowohl die aktuelle Betriebszeit, die Position und IP-Adresse können gemäß dieser Ausführungsform über einen Erkennungssensor erkannt werden. Die gespeicherte Betriebszeit, die Position und IP-Adresse können beispielsweise sehr einfach in einer Speichereinrichtung hinterlegt werden und einen Hinweis darauf geben, ob das Haushaltsgerät einer Positionsänderung erfahren hat.

Weiterhin wird ein Verfahren vorgestellt, das einen Schritt des Ausgebens eines Blockiersignals ansprechend auf den Schritt des Vergleichens umfasst, wenn die Positionsänderung erkannt wurde, um eine Wärmepumpe des Haushaltgeräts zumindest teilweise zu blockieren. Das bedeutet, dass eine Funktionalität der Wärmepumpe des Haushaltgeräts eingeschränkt werden kann, wenn die Positionsänderung des Haushaltgeräts erkannt wurde. Auf dieser Weise kann eine Beschädigung des Haushaltgeräts sehr einfach vermieden oder zumindest verringert werden.

Gemäß einer Ausführungsform kann im Schritt des Ausgebens des Blockiersignals eine Funktionalität der Wärmepumpe vollständig blockiert werden. Hier kann erreicht werden, dass die Wärmepumpe beispielsweise nicht aktiv ist, wenn die Positionsänderung erkannt wurde. Dadurch kann vorteilhafterweise der Verschleiß der Wärmepumpe reduziert werden.

Gemäß einer Ausführungsform kann das Verfahren weiterhin einen Schritt des Bereitstellens eines Startsignals umfassen, um ein Schonprogramm des Haushaltgeräts zu starten, wenn die Positionsänderung erkannt wurde. Dabei kann das Schonprogramm über eine haushaltgerätinterne und zusätzlich oder alternativ haushaltgerätexterne Anzeigeeinrichtung oder Eingabeeinrichtung manuell gestartet werden. Unter einem Schonprogramm kann beispielsweise eine Funktion oder ein Arbeitsprogramm verstanden werden, durch welches ein mittels des Haushaltgeräts zu bearbeitendes Objekt gegenüber der Bearbeitung durch ein Regulärprogramm schonender bearbeitet wird. Das Schonprogramm kann beispielsweise als Programm realisiert werden, das ein so genanntes "kaltes Lüften" ermöglicht, ohne die Wärmepumpe anzusteuern. Gemäß einer Ausführungsform kann das Schonprogramm eine vordefinierte Dauer aufweisen. Die Anzeigeeinrichtung kann beispielsweise als ein berührungsempfindliches Display, aber auch als Smartphonedisplay realisiert sein, über das ein Nutzer ein gewünschtes Programm auswählen und eingeben kann.

Ferner kann das Verfahren einen Schritt des Ausgebens eines Initiierungssignals nach dem Schritt des Vergleichens umfassen, um ein Regulärprogramm des Haushaltgeräts zu initiieren. Unter einem Initiieren kann beispielsweise ein Starten eines Programms oder das Ansteuern eines Startens eines Programms verstanden werden. Das Regulärprogramm des Haushaltgeräts kann gemäß einer Ausführungsform ein Programm sein, für das die Wärmepumpe benötigt wird.

Weiterhin wird das Verfahren vorgestellt, bei dem im Schritt des Ausgebens des Initiierungssignals das Regulärprogramm ausgegeben oder initiiert werden kann, wenn im Schritt des Vergleichens keine Positionsänderung erkannt wurde oder wenn ein Schonprogramm beendet wurde. Gemäß dieser Ausführungsform kann ein Nutzer auch nach dem Durchführen des Schonprogramms ein weiteres Programm auswählen, das im Gegensatz zu dem Schonprogramm mit der Wärmepumpe durchgeführt wird.

Das Verfahren kann weiterhin einen Schritt des Bereitstellens eines Anzeigesignals an eine Anzeigeeinrichtung umfassen, wenn die Positionsänderung erkannt wurde. Auf diese Weise kann vorteilhaft einem Nutzer des Haushaltgerätes angezeigt werden, dass eine Positionsänderung des Haushaltgeräts erkannt wurde und dass gegebenenfalls einige Funktionen des Haushaltgeräts nicht zur Verfügung stehen.

Außerdem wird ein Haushaltgerät vorgestellt, das einen Erkennungssensor, eine Speichereinrichtung, eine Wärmepumpe sowie ein Steuergerät aufweist.

Wie zuvor genannt kann das Haushaltgerät als Trockner, Kühlgerät, aber auch als Reinigungsgerät realisiert werden.

Auch wenn der beschriebene Ansatz anhand eines Haushaltgeräts beschrieben wird, kann das hier beschriebene Verfahren entsprechend im Zusammenhang mit einem gewerblichen oder professionellen Gerät, beispielsweise einem medizinischen Gerät, wie einem Reinigungs- oder Desinfektionsgerät, einem Kühlschrank oder im Zusammenhang mit einer Kühlkammer, einer Waschmaschine mit oder ohne Trocknerfunktion oder einem Trockner eingesetzt werden.

Der hier vorgestellte Ansatz schafft ferner ein Steuergerät, das ausgebildet ist, um die Schritte einer Variante eines hier vorgestellten Verfahrens in entsprechenden Einheiten durchzuführen, anzusteuern bzw. umzusetzen. Auch durch diese Ausführungsvariante der Erfindung in Form eines Steuergeräts kann die dem hier vorgestellten Ansatz zugrunde liegende Aufgabe schnell und effizient gelöst werden.

Das Steuergerät kann ausgebildet sein, um Eingangssignale einzulesen und unter Verwendung der Eingangssignale Ausgangssignale zu bestimmen und bereitzustellen. Ein Eingangssignal kann beispielsweise ein über eine Eingangsschnittstelle des Steuergeräts einlesbares Sensorsignal darstellen. Ein Ausgangssignal kann ein Steuersignal oder ein Datensignal darstellen, das an einer Ausgangsschnittstelle dem Steuergerät bereitgestellt werden kann. Das Steuergerät kann ausgebildet sein, um die Ausgangssignale unter Verwendung einer in Hardware oder Software umgesetzten Verarbeitungsvorschrift zu bestimmen. Beispielsweise kann das Steuergerät dazu eine Logikschaltung, einen integrierten Schaltkreis oder ein Softwaremodul umfassen und beispielsweise als ein diskretes Bauelement realisiert sein oder von einem diskreten Bauelement umfasst sein.

Von Vorteil ist auch ein Computer-Programmprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann. Wird das Programmprodukt oder Programm auf einem Computer oder einem Steuergerät ausgeführt, so kann das Programmprodukt oder Programm zur Durchführung, Umsetzung und/oder Ansteuerung der Schritte des Verfahrens nach einer der vorstehend beschriebenen Ausführungsformen verwendet werden.

Ein Ausführungsbeispiel der Erfindung ist in den Zeichnungen rein schematisch dargestellt und wird nachfolgend näher beschrieben. Es zeigt
- Figur 1: eine schematische Darstellung eines Haushaltgeräts gemäß einem Ausführungsbeispiel; und
- Figur 2: ein Ablaufdiagramm eines Verfahrens zum Erkennen einer Positionsänderung für ein Haushaltgerät gemäß einem Ausführungsbeispiel.

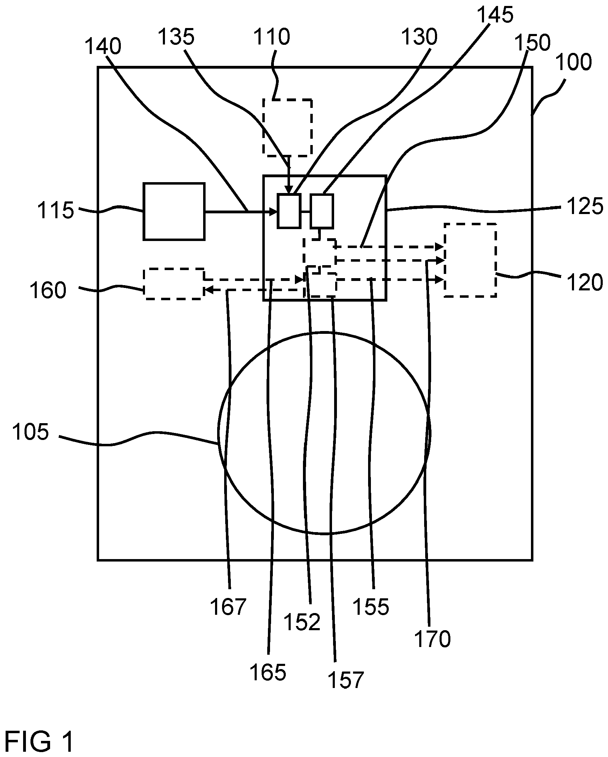

Figur 1 zeigt eine schematische Darstellung eines Haushaltgeräts 100 gemäß einem Ausführungsbeispiel. Das Haushaltgerät 100 ist als ein Trockner, ein Waschtrockner, aber auch als Kühlgerät mit einer Wärmepumpentechnologie realisierbar. Gemäß diesem Ausführungsbeispiel ist das Haushaltgerät 100 jedoch als Trockner ausgeformt, der gemäß einem Ausführungsbeispiel eine Wäschetrommel 105 zum Aufnehmen von zu trocknender Wäsche aufweist und der außerdem einen Erkennungssensor 110, eine Speichereinrichtung 115, eine Wärmepumpe 120 sowie ein Steuergerät 125 aufweist. Der Erkennungssensor ist ausgebildet, um eine IST-Position des Haushaltgeräts 100 zu erkennen, die Speichereinrichtung 115 ist ausgebildet, um eine Initialposition des Haushaltgeräts 100 zu speichern. Die Wärmepumpe 120 ist ausgebildet, um thermische Energie aus beispielsweise einer Umgebung mit niedrigerer Temperatur herauszuziehen und als Nutzenergie weiterzuverwenden. Das Steuergerät 125 ist ausgebildet, um ein Verfahren zum Erkennen einer Positionsänderung für ein Haushaltgerät 100 durchzuführen. Die Positionsänderung kann beispielsweise durch einen Umzug oder eine Umstellung des Haushaltgeräts 100 im Haushalt eines Nutzers stattfinden. Dabei liest das Steuergerät 125 über eine Einleseeinheit 130 ein Positionssignal 135 ein, das die IST-Position des Haushaltgeräts 100 repräsentiert, und außerdem ein Herkunftsignal 140, das die Initialposition des Haushaltgeräts 100 repräsentiert. Das Positionssignal 135 oder das Herkunftssignal 140 kann beispielsweise ein Signal sein, das eine unter Verwendung eines Satellitennavigationssystems ermittelte geografische Position repräsentiert. Des Weiteren vergleicht das Steuergerät 125 über eine Vergleichseinheit 145 die IST-Position mit der Initialposition, um die Positionsänderung zu erkennen, wenn die IST-Position um mehr als einen vorbestimmten Toleranzwert von der Initialposition abweicht.

Im Folgenden werden optionale Ausführungsbeispiele des hier vorgestellten Ansatzes beschrieben:
Gemäß diesem Ausführungsbeispiel ist die IST-Position als ein eine aktuelle Betriebszeit, eine aktuelle Position und/oder eine aktuelle IP-Adresse repräsentierender Parameter realisiert. Das bedeutet, dass der Erkennungssensor 110 beispielsweise als Messgerät realisiert sein kann. Umgekehrt ist die Initialposition gemäß diesem Ausführungsbeispiel als ein eine gespeicherte Betriebszeit, eine gespeicherte Position und/oder eine gespeicherte IP-Adresse des Haushaltgeräts repräsentierender Parameter realisiert, der dem entsprechend in der Speichereinrichtung 115 hinterlegt wurde. Gemäß diesem Ausführungsbeispiel gibt das Steuergerät 125 ein Blockiersignal 150 über eine Ausgabeeinheit 152 aus, wenn die Positionsänderung erkannt wurde, um die Wärmepumpe 120 des Haushaltgeräts 100 zumindest teilweise zu blockieren. Das bedeutet, dass die Wärmepumpe entweder teilweise aktiv ist, sodass beispielsweise ein Verschleiß stark reduziert wird, oder aber nicht aktiv ist, wodurch ein Verschleiß durch beispielsweise unsachgemäßen Gebrauch verhindert wird. Weiterhin stellt das Steuergerät 125 ein Startsignal 155 über eine Bereitstelleinheit 157 bereit, um ein Schonprogramm des Haushaltgeräts 100 zu starten. Das Schonprogramm ist gemäß diesem Ausführungsbeispiel ein Programm, das ohne die Wärmepumpe 120 durchgeführt wird. Das Schonprogramm wird dann durchgeführt, wenn die zuvor genannte Positionsänderung erkannt wurde. Gemäß diesem Ausführungsbeispiel ist das Schonprogramm optional über eine Anzeigeeinrichtung 160 manuell durch einen Nutzer des Haushaltgeräts 100 via Eingabesignal 165 startbar. Die Anzeigeeinrichtung 160 ist dabei beispielsweise als eine berührungsempfindliche Bedienoberfläche realisierbar. Gemäß einem Ausführungsbeispiel kann die Anzeigeeinrichtung 160 als Haushaltgerätinterne und/oder Haushaltgerätexterne Anzeigeeinrichtung 160, wie beispielsweise einem Smartphone, realisiert sein. Des Weiteren wird der Nutzer des Haushaltgeräts 100 gemäß diesem Ausführungsbeispiel über ein Anzeigesignal 167 informiert, das das Steuergerät 125 an die Anzeigeeinrichtung 160 bereitstellt, wenn die Positionsänderung erkannt wurde.

Gemäß diesem Ausführungsbeispiel gibt das Steuergerät 125 weiterhin ein Initiierungssignal 170 aus, um ein Regulärprogramm des Haushaltgeräts 100 zu initiieren. Als Regulärprogramm wird dabei jedes Programm des Haushaltgeräts 100 mit Ausnahme des Schonprogramms bezeichnet, das unter Verwendung der Wärmepumpe 120, aber auch ohne Verwendung der Wärmepumpe 120 durchführbar ist. Gemäß diesem Ausführungsbeispiel gibt das Steuergerät 125 das Initiierungssignal 170 immer dann aus, wenn zuvor keine Positionsänderung erkannt wurde oder wenn das Schonprogramm bereits durchgeführt und abgeschlossen wurde.

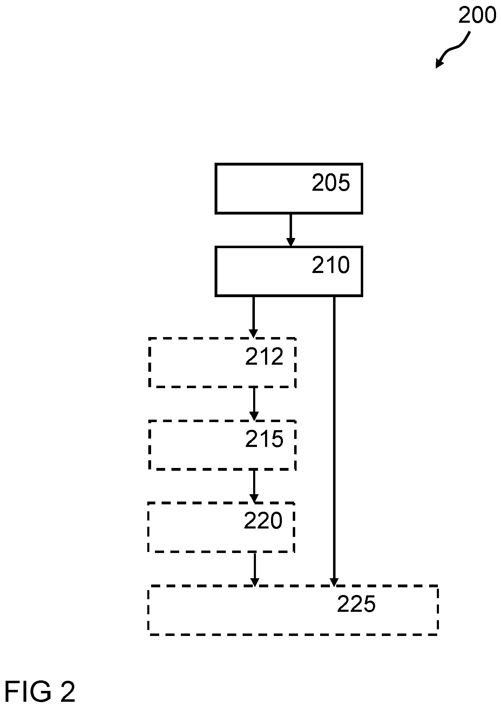

Figur 2 zeigt ein Ablaufdiagramm eines Verfahrens 200 zum Erkennen einer Positionsänderung für ein Haushaltgerät gemäß einem Ausführungsbeispiel. Das Verfahren kann in einem Haushaltgerät 100, wie es in Figur 1 beschrieben wurde, durchgeführt werden. Das Verfahren 200 umfasst dabei einen Schritt 205 des Einlesens eines Positionssignals, das eine IST-Position des Haushaltgeräts repräsentiert, und eines Herkunftsignals, das eine Initialposition des Haushaltgeräts repräsentiert, und einen Schritt 210 des Vergleichens des Positionssignals mit dem Herkunftsignal. Im Schritt 210 des Vergleichens wird eine Positionsänderung erkannt, wenn die IST-Position um mehr als einen vorbestimmten Toleranzwert von der Initialposition abweicht.

Im Folgenden werden optionale Ausführungsbeispiele des hier vorgestellten Verfahrens 200 beschrieben:
Gemäß einem Ausführungsbeispiel umfasst das Verfahren 200 einen Schritt 212 des Bereitstellens eines Anzeigesignals an eine Anzeigeeinrichtung, wenn die Positionsänderung erkannt wurde. Weiterhin umfasst das Verfahren 200 gemäß einem Ausführungsbeispiel einen Schritt 215 des Ausgebens eines Blockiersignals, das ansprechend auf den Schritt 210 des Vergleichens durchgeführt wird, wenn die Positionsänderung erkannt wurde, um eine Wärmepumpe des Haushaltgeräts zumindest teilweise zu blockieren. In einem Schritt 220 des Bereitstellens wird ein Startsignal bereitgestellt, um ein Schonprogramm des Haushaltgeräts zu starten, wenn die Positionsänderung erkannt wurde. Dabei wird gemäß einem Ausführungsbeispiel das Schonprogramm über eine Haushaltgerätinterne und/oder Haushaltgerätexterne Anzeigeeinrichtung manuell gestartet. Weiterhin umfasst das Verfahren 200 gemäß diesem Ausführungsbeispiel einen Schritt 225 des Ausgebens eines Initiierungssignals, um ein Regulärprogramm des Haushaltgeräts zu initiieren. Das Regulärprogramm wird gemäß einem Ausführungsbeispiel dann ausgegeben, wenn im Schritt 210 des Vergleichens keine Positionsänderung erkannt wurde oder wenn das Schonprogramm beendet wurde.

In anderen Worten bezieht sich das Verfahren 200 auf ein Wiederaufstellungsprogramm für Haushaltgeräte mit Wärmepumpentechnologie. Erfolgt beispielsweise ein Transport eines Haushaltgerätes mit Wärmepumpentechnologie entgegen einer Beschreibung in einer Bedienungsanleitung, kann die Wärmepumpe Schaden nehmen, da sich im Kompressor, der auch als Wärmepumpe bezeichnet wird, befindliches Öl beispielsweise in einem Kältekreislauf verteilt. Beim Einschalten der Wärmepumpe wird dann eine Schmierung der Wärmepumpenkomponenten, wie Roller oder Schieber, nicht korrekt funktionieren. Hierdurch kann ein erhöhter Verschleiß in den ersten Betriebsstunden des Gerätes auftreten. Dieser Verschleiß verursacht einen dauerhaften Performanceverlust. Kurzum kann es durch den Transport zu einem temporären Funktionsausfall der Wärmepumpentechnologie kommen. Derzeit ist es dem Haushaltgerät nicht möglich zu erkennen, ob es transportiert wurde und daher gegebenenfalls eine Ruhephase oder Stillstandphase für den Kompressor erforderlich ist, denn nur dann kann sich das Öl wieder ordnungsgemäß verteilen und eine Schmierung der Komponenten sicherstellen.

Durch das hier vorgestellte Haushaltgerät und Verfahren 200 soll ein Lösungsansatz dessen geboten werden, indem beispielsweise eine Abfrage des Standortes durch unterschiedliche Technologien durchgeführt wird, wie beispielsweise ein GPS-Signal. Gemäß diesem Ausführungsbeispiel wird dem entsprechend unabhängig von einer Programmwahl durch den Nutzer das Schonprogramm durchgeführt, das beispielsweise "Lüften kalt" benannt ist und gemäß einem Ausführungsbeispiel eine Dauer von 60 Minuten hat.

Eine Ortsveränderung durch beispielsweise einen Umzug kann durch eine Positionsänderung, beispielsweise per GPS-Signal, das auch als Trigger bezeichnet werden kann, oder durch die Änderung der IP-Adresse, beispielsweise bei vernetzten Geräten, detektiert werden. Dadurch wird als Reaktion eine Initialisierung eines Verfahrenschrittes ausgelöst, der so konzipiert ist, dass die Wärmepumpe beispielsweise innerhalb der ersten 60 Minuten nicht angesteuert wird. Eine unnötige Wärmepumpenschädigung wird vermieden. Auf diese Weise kann das Haushaltgerät vor einem dauerhaften Schaden bewahrt werden.

Im Zuge der Positionsänderung wird durch die Veränderung des oben Beschriebenen (z. B. GPS-Signal, IP-Adresse, Betriebszeit) automatisch im ersten Programm nach dieser Ortsoder IP - Änderung ein abgestimmter Programmblock der für das angewählte Programm typischen Verfahrenstechnik vorgeschaltet, der auch als Schonprogramm bezeichnet wird. Dieses Schonprogramm wird gemäß einem Ausführungsbeispiel aktiviert, wenn zumindest einer der folgenden Parameter erfüllt ist:
- Änderung der GPS-Position
- Wechsel der IP-Adresse
- Betriebsstundenzähler < 1 Stunde

Das Schonprogramm beinhaltet beispielsweise ein ca. 60 minütiges "Lüften kalt", bei dem die Wärmepumpe nicht eingeschaltet wird. Zusätzlich kann dem Nutzer bei Erfüllung einer der obigen Kriterien über die Bedien- und/oder Anzeigeeinrichtung des Haushaltgerätes oder über eine externe Anzeigeeinrichtung (z. B. Smartphone) eine Information gegeben werden. Außerdem wird dem Nutzer die Möglichkeit gegeben, über beispielsweise ein Auswahlmenü die Funktion zur Wiederaufstellung, das bedeutet das Schonprogramm, manuell zu starten. Auf diese Weise kann eine Schädigung der Wärmepumpe nach einem Wiederaufstellen vermieden werden.

## Patentansprüche

1. Verfahren (200) zum Erkennen einer Positionsänderung für ein Haushaltgerät (100), wobei das Verfahren (200) die folgenden Schritte umfasst:
- Einlesen (205) eines Positionssignals (135), das eine IST-Position des Haushaltgeräts (100) repräsentiert, und Einlesen eines in einer Speichereinrichtung (115) gespeicherten Herkunftsignals (140), das eine Initialposition des Haushaltgeräts (100) repräsentiert; und
- Vergleichen (210) des Positionssignals (135) mit dem Herkunftsignal (140), um die Positionsänderung zu erkennen, wenn die IST-Position um mehr als einen vorbestimmten Toleranzwert von der Initialposition abweicht.

2. Verfahren (200) gemäß Anspruch 1, bei dem im Schritt (205) des Einlesens als ein die IST-Position repräsentierender Parameter eine aktuelle Betriebszeit und/oder eine aktuelle Position und/oder eine aktuelle IP-Adresse des Haushaltgerät (100) eingelesen wird und als ein die Initialposition repräsentierender Parameter eine gespeicherte Betriebszeit des Haushaltgeräts (100) und/oder eine gespeicherte Position des Haushaltgeräts (100) und/oder eine gespeicherte IP-Adresse des Haushaltgeräts (100) eingelesen wird.

3. Verfahren (200) gemäß einem der vorangegangenen Ansprüche, mit einem Schritt (215) des Ausgebens eines Blockiersignals (150) ansprechend auf den Schritt (210) des Vergleichens, wenn die Positionsänderung erkannt wurde, um eine Wärmepumpe (120) des Haushaltgeräts (100) zumindest teilweise zu blockieren.

4. Verfahren (200) gemäß Anspruch 3, bei dem im Schritt (215) des Ausgebens des Blockiersignals (150) eine Funktionalität der Wärmepumpe (120) vollständig blockiert wird.

5. Verfahren (200) gemäß einem der vorangegangenen Ansprüche, mit einem Schritt (220) des Bereitstellens eines Startsignals (155), um ein Schonprogramm des Haushaltgeräts (100) zu starten, wenn die Positionsänderung erkannt wurde, insbesondere wobei das Schonprogramm mittels einer haushaltgerätinterne und/oder haushaltgerätexterne Anzeigeeinrichtung (160) manuell gestartet wird.

6. Verfahren (200) gemäß einem der vorangegangenen Ansprüche, mit einem Schritt (225) des Ausgebens eines Initiierungssignals (170) nach dem Schritt (210) des Vergleichens, um ein Regulärprogramm des Haushaltgeräts (100) zu initiieren.

7. Verfahren (200) gemäß Anspruch 6, bei dem im Schritt (225) des Ausgebens des Initiierungssignals (170) das Regulärprogramm ausgegeben oder initiiert wird, wenn im Schritt (210) des Vergleichens keine Positionsänderung erkannt wurde oder wenn ein Schonprogramm beendet wurde.

8. Verfahren (200) gemäß einem der vorangegangenen Ansprüche, mit einem Schritt (212) des Bereitstellens eines Anzeigesignals (167) an eine Anzeigeeinrichtung (160), wenn die Positionsänderung erkannt wurde.

9. Steuergerät (125), das ausgebildet ist, um die Schritte (205, 210) des Verfahrens (200) gemäß einem der vorangegangenen Ansprüche in entsprechenden Einheiten (130, 145) auszuführen.

10. Computer-Programmprodukt mit Programmcode zur Durchführung des Verfahrens (200) nach einem der vorangegangenen Ansprüche, wenn das Computer-Programmprodukt auf einem Steuergerät (125) ausgeführt wird.

11. Haushaltgerät (100) das die folgenden Merkmale aufweist:
- einen Erkennungssensor (110);
- eine Speichereinrichtung (115);
- eine Wärmepumpe (120); und
- ein Steuergerät (125) gemäß Anspruch 9.
